# EUROPÄISCHE PATENTSCHRIFT

(11) **EP 3 925 427 B1**
(45) Veröffentlichungstag und Bekanntmachung des Hinweises auf die Patenterteilung: **15.01.2025**
(21) Anmeldenummer: 20180105.7
(22) Anmeldetag: 15.06.2020
(51) Int. Cl.: A01D 34/416, A01D 34/73, A01D 34/81

(54) **SCHNEIDKOPF FÜR EINE MOTORSENSE**
CUTTING HEAD FOR A MOTOR STRIMMER
TÊTE DE COUPE POUR UNE DÉBROUSSAILLEUSE

(43) Veröffentlichungstag der Anmeldung: 22.12.2021
(73) Patentinhaber: Andreas Stihl AG & Co. KG, 71336 Waiblingen (DE)
(72) Erfinder: RETHABER, Achim, 70736 Fellbach (DE)
(74) Vertreter: Wasmuth, Rolf

(56) Entgegenhaltungen:
- EP-A2- 2 737 788
- WO-A2-2008/053508
- US-A1- 2002 073 556
- US-A1- 2008 271 424
- US-A1- 2019 075 721

## Beschreibung

Die Erfindung betrifft einen Schneidkopf der im Oberbegriff des Anspruchs 1 angegebenen Gattung.

Es sind Schneidköpfe für eine Motorsense bekannt, die aus einem Grundkörper bestehen, wobei der Grundkörper zwei Grundkörperteile umfasst. Der Grundkörper ist im Betrieb einer Motorsense um eine Drehachse drehend angetrieben. Zwischen den Grundkörperteilen ist mindestens ein Schneidwerkzeug angeordnet, wobei im Grundkörper ein Lagerbolzen angeordnet ist, an welchem das Schneidwerkzeug gehalten ist. Zur Montage des Schneidkopfes ist das Schneidwerkzeug auf den Lagerbolzen aufzufädeln, und anschließend sind die Grundkörperteile auf der Abtriebswelle der Motorsense zu befestigen. Nachteilig an derartigen Schneidköpfen ist, dass durch die vielen Einzelteile die Montage erheblich erschwert ist. Schneidköpfe der genannten Art sind aus der US 2008/271424 A1 bekannt.

Der Erfindung liegt die Aufgabe zugrunde, einen Schneidkopf der gattungsgemäßen Art derart weiterzubilden, dass eine einfache Montage und Demontage des Schneidkopfes sowie eine einfache Befestigung des Schneidkopfes an der Abtriebswelle der Motorsense ermöglicht ist.

Die Aufgabe wird durch einen Schneidkopf nach Anspruch 1 gelöst.

Der erfindungsgemäße Schneidkopf für eine Motorsense umfasst einen geteilten Grundkörper. Der Grundkörper umfasst wiederum ein oberes Grundkörperteil und ein unteres Grundkörperteil. Das obere Grundkörperteil ist das Grundkörperteil, das bei Befestigung des Schneidkopfes stirnseitig, nämlich mit seiner Oberseite, an der Motorsense anliegt. Das untere Grundkörperteil ist das Grundkörperteil, das bei Befestigung des Schneidkopfes an der Motorsense im Normalbetrieb der Motorsense dem Boden zugewandt ist. Am unteren Grundkörper ist ein Schraubelement angeordnet. Das Schraubelement dient zur Befestigung des Grundkörpers an einer Abtriebswelle einer Motorsense. Zwischen dem oberen Grundkörperteil und dem unteren Grundkörperteil ist mindestens eine Aufnahme zu Befestigung eines Schneidwerkzeuges vorgesehen. Das Schneidwerkzeug ist axial, also in Richtung der Drehachse des Grundkörpers, zwischen dem oberen Grundkörperteil und dem unteren Grundkörperteil angeordnet. Der Grundkörper ist um seine Drehachse im Betrieb einer Motorsense drehend antreibbar. Der obere Grundkörperteil und der untere Grundkörperteil sind mittels einer lösbaren Schnappverbindung zueinander gehalten.

Die Schnappverbindung ermöglicht es dem Bediener der Motorsense, das obere Grundkörperteil mit dem unteren Grundkörperteil zu verbinden, wobei das Schneidwerkzeug an der Aufnahme gehalten ist. Dadurch sind das obere Grundkörperteil und das untere Grundkörperteil miteinander verbunden und bilden mit dem Schneidwerkzeug eine Einheit, die auf die Abtriebswelle der Motorsense geschraubt werden kann. Somit muss der Bediener der Motorsense die verschiedenen Schneidkopfteile nicht einzeln auf der Abtriebswelle montieren. Auch beim Demontieren des Schneidkopfes ist ein ungewolltes Auseinanderfallen der Schneidkopfteile vermieden, da diese durch die Schnappverbindung miteinander gehalten sind.

Es ist vorteilhaft vorgesehen, dass die Schnappverbindung einen in radialer Richtung zur Drehachse gemessenen Abstand aufweist, der höchstens 40 %, insbesondere höchstens 30 %, vorzugsweise höchstens 25 % des Durchmessers des Schneidkopfes beträgt.

Es ist vorteilhaft vorgesehen, dass die Aufnahme eine in Richtung der Drehachse verlaufende Lagerachse aufweist, wobei die Lagerachse einen Abstand zur Drehachse besitzt und der Abstand zwischen Lagerachse und Drehachse größer ist als der Abstand zwischen der Schnappverbindung und der Drehachse. Die Schnappverbindung ist somit im Innenbereich des Schneidkopfes und damit geschützt angeordnet. Durch die der Drehachse sehr nahegelegene Anordnung der Schnappverbindung begrenzt die Schnappverbindung die Schwenkbewegung der Schneidwerkzeuge nicht. Stößt ein Schneidwerkzeug im Betrieb auf ein festes Hindernis, kann das Schneidwerkzeug entgegen der Drehrichtung des Schneidkopfes weit zurückschwenken ohne an der Schnappverbindung anzuschlagen.

Die Schnappverbindung umfasst vorzugsweise mindestens einen Greifhaken und insbesondere mindestens eine mit dem Greifhaken in Wirkverbindung stehende Haltekontur. Der Greifhaken ist vorzugsweise am oberen Grundkörperteil und die mindestens eine Haltekontur bevorzugt am unteren Grundkörperteil angeordnet. Beim Zusammenführen des oberen Grundkörperteils und des unteren Grundkörperteils kontaktiert der Greifhaken die Haltekontur und wird dabei radial zur Drehachse ausgelenkt. Der Greifhaken ist hierzu vorzugsweise biegsam in Richtung radial zur Drehachse ausgebildet. Sind das obere Grundkörperteil und das untere Grundkörperteil ausreichend weit zusammengeschoben, rastet der Greifhaken der Schnappverbindung hinter der Haltekontur ein. Der mindestens eine Greifhaken weist vorzugsweise einen Hakenkopf auf, der zum Hintergreifen der mindestens einen Haltekontur ausgebildet ist. Ist die Schnappverbindung eingerastet, sind das obere Grundkörperteil und das untere Grundkörperteil in Richtung der Drehachse des Schneidkopfes zusammengehalten. Der Hakenkopf ist vorzugsweise nach außen, in radialer Richtung von der Drehachse weggerichtet. Dadurch wird der Greifhaken im Betrieb der Motorsense durch die Fliehkräfte gegen die Haltekontur nach außen gedrückt. Somit bleibt die Form des Greifhakens bzw. die Vorspannung des Greifhakens gegen die Haltekontur auch über eine lange Betriebsdauer des Schneidkopfes erhalten.

Der Hakenkopf ist vorzugsweise derart ausgebildet, dass die Schnappverbindung beim Zusammendrücken des oberen Grundkörperteils und des unteren Grundkörperteils einrastet und beim Auseinanderziehen der Grundkörperteile entrastet. Zum Einrasten der Schnappverbindung sind die Grundkörperteile in Richtung der Drehachse zusammenzuschieben, zum Lösen der Schnappverbindung sind die Grundkörperteile in die entgegengesetzte Richtung auseinander zu ziehen. Die zum Einrasten und Lösen der Schnappverbindung notwendigen Kräfte ergeben sich aus den Geometrien des Hakenkopfes sowie der Haltekontur. Auch die Federwirkung der Greifhaken beeinflusst die Einrast- und Lösekräfte der Schnappverbindung. Durch Anpassung der Geometrien des Hakenkopfes und der Haltekontur können die Einrast- und Lösekräfte der Schnappverbindung entsprechend den Anforderungen an den Schneidkopf angepasst werden. Die Schnappverbindung weist vorzugsweise zwei, insbesondere drei oder mehr Greifhaken mit entsprechenden Haltekonturen auf. Sind mehrere Greifhaken und Haltekonturen vorgesehen, sind diese vorzugsweise in gleichmäßigen Winkelabständen um die Drehachse des Schneidkopfes angeordnet.

Vorzugsweise ist eine Störkontur an einem der beiden Grundkörperteile und eine mit der Störkontur zusammenwirkende, in Richtung der Drehachse verlaufende Führungsnut an dem anderen Grundkörperteil vorgesehen, um das obere Grundkörperteil und das untere Grundkörperteil mittels der Störkontur und der Führungsnut in Umfangsrichtung der Drehachse zueinander auszurichten. Nur wenn das obere Grundkörperteil und das untere Grundkörperteil derart zueinander ausgerichtet sind, dass die Störkontur in die Führungsnut eingreifen kann, ist ein Zusammenführen der Grundkörperteile und folglich ein Einrasten der Schnappverbindung möglich. Andernfalls wird das Zusammenführen der Grundkörperteile durch die Störkontur blockiert. Folglich ist die Schnappverbindung insbesondere derart ausgebildet, dass nur bei über die Störkontur und die Führungsnut zueinander ausgerichtetem oberen Grundkörperteil und unteren Grundkörperteil die Schnappverbindung einrastbar ist. Dem Bediener der Motorsense wird dadurch auf einfache Art und Weise die richtige Montage des Schneidkopfes ermöglicht. Fehler bei der Montage des Schneidkopfes sind durch den Benutzer im Sinne von Poka Yoke ausgeschlossen.

Es ist vorteilhaft vorgesehen, dass über die Störkontur und die Führungsnut Drehmomente in Umfangsrichtung zwischen dem oberen Grundkörperteil und dem unteren Grundkörperteil übertragbar sind. Dadurch wird bereits bei der Montage des Schneidkopfes die Schnappverbindung bei auf die Grundkörperteile wirkenden Drehmomenten geschützt, da diese über die Störkontur und die Führungsnut abgefangen werden. Die Schnappverbindung wird nicht auf Drehmoment belastet. Vorzugsweise umfasst der Grundkörper mindestens zwei oder auch mehrere Störkonturen mit korrespondierenden Führungsnuten.

Die Aufnahme für ein Schneidwerkzeug des Schneidkopfes ist vorzugsweise als ein Lagerbolzen ausgebildet. Durch den Lagerbolzen ist vorzugsweise ein Schneidwerkzeug am Grundkörper anordenbar. Der Lagerbolzen ist dabei derart ausgebildet, dass das Schneidwerkzeug an dem Lagerbolzen schwenkbar gehalten ist. Der Lagerbolzen ist vorzugsweise einseitig an dem oberen Grundkörperteil oder dem unteren Grundkörperteil befestigt. Dadurch kann insbesondere gegenüber Schneidköpfen, deren Grundkörperteile auch über die Lagerbolzen miteinander verschraubt sind, eine Montage bzw. Demontage der Grundkörperteile auf einfache Weise ermöglicht werden. Zum Trennen bzw. Zusammenfügen des oberen Grundkörperteils und des unteren Grundkörperteils sind lediglich die Schnappverbindungen zu lösen bzw. einzurasten. Der Lagerbolzen ist vorzugsweise am oberen Grundkörperteil befestigt.

Es ist vorteilhaft vorgesehen, dass das Schraubelement drehfest an dem unteren Grundkörperteil angeordnet ist. Bei Befestigung des Schneidkopfes an der Motorsense wird der Schneidkopf vorzugsweise als eine vormontierte Einheit über das Schraubelement auf die Abtriebswelle der Motorsense aufgeschraubt. Dabei wird über das Schraubelement das untere Grundkörperteil gegen das obere Grundkörperteil gespannt, wobei das obere Grundkörperteil stirnseitig an der Motorsense abgestützt ist. Das Schraubelement kann ein separat vom unteren Grundkörper ausgebildetes Element oder ein im unteren Grundkörper vorgesehenes Gewinde sein. Dadurch wird sichergestellt, dass sich das Schraubelement mit dem unteren Grundkörperteil auf der Abtriebswelle gegen das obere Grundkörperteil nachspannt.

An der mindestens einen Aufnahme des Schneidkopfes ist vorzugsweise ein Schneidwerkzeug schwenkbar angeordnet. Mit dem aus dem Grundkörper des Schneidkopfes herausragenden Außenabschnitt des Schneidwerkzeuges kann Gras, Gestrüpp oder ähnliches geschnitten werden.

Weitere Merkmale der Erfindung ergeben sich aus der Beschreibung und der Zeichnung, in der ein nachfolgend im Einzelnen beschriebenes Ausführungsbeispiel der Erfindung dargestellt ist. Es zeigen:
- Fig. 1: in einer schematischen Seitenansicht eine Motorsense mit einem Schneidkopf,
- Fig. 2: in einer perspektivischen Darstellung den erfindungsgemäßen Schneidkopf mit Schneidwerkzeug,
- Fig. 3: in einer Seitenansicht den Schneidkopf nach Fig. 2,
- Fig. 4: in einer Ansicht von unten den Schneidkopf nach Fig. 2,
- Fig. 5: in einer Draufsicht den Schneidkopf nach Fig. 2,
- Fig. 6: in einer Schnittdarstellung den Schneidkopf entlang der Pfeile VI nach Fig. 5,
- Fig. 7: in einer Schnittdarstellung den Schneidkopf entlang der Pfeile VII nach Fig. 5,
- Fig. 8: in einer Schnittdarstellung den Schneidkopf entlang der Pfeile VIII nach Fig. 7,
- Fig. 9: in einer Schnittdarstellung den Schneidkopf entlang der Pfeile IX nach Fig. 5,
- Fig. 10: in einer Schnittdarstellung von oben den Schneidkopf mit ausgeschwenkten Schneidwerkzeugen nach Fig. 2,
- Fig. 11: in einer perspektivischen Darstellung das obere Grundkörperteil des Schneidkopfes,
- Fig. 12: in einer Ansicht von unten das obere Grundkörperteil des Schneidkopfes,
- Fig. 13: in einer Schnittdarstellung das obere Grundkörperteil entlang der Pfeile XIII nach Fig. 12,
- Fig. 14: in einer perspektivischen Darstellung das untere Grundkörperteil des Schneidkopfes,
- Fig. 15: in einer Draufsicht das untere Grundkörperteil des Schneidkopfes und
- Fig. 16: in einer Schnittdarstellung das untere Grundkörperteil entlang der Pfeile XVI nach Fig. 15.

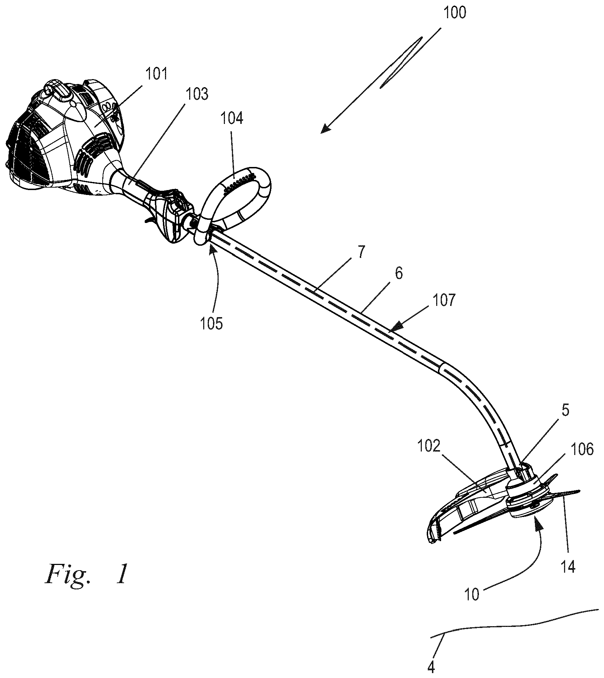

In Fig. 1 ist ein Arbeitsgerät 100 von der Bauart eine Motorsense in einer perspektivischen Seitenansicht dargestellt. Ein Schneidkopf 10 ist an einem ersten, unteren Ende 5 eines Führungsrohres 6 vorgesehen, an dessen zweitem, oberen Ende 105 ein Antriebsmotor 101 gehalten ist. Der Antriebsmotor 101 treibt eine Verbindungswelle 107 an, die vorteilhaft als flexible Welle 7 ausgebildet ist und der Krümmung des Führungsrohres 6 folgt. Im Bereich des oberen Endabschnittes des Führungsrohres 6 ist ein Bediengriff 103 vorgesehen, der von dem Führungsrohr 6 durchragt wird. Dem Bediengriff 103 benachbart ist ein am Führungsrohr 6 befestigter Rundgriff 104 montiert.

Durch die Krümmung des Führungsrohres 6 ist die Arbeitslage des Schneidkopfes 10 relativ zum Boden bestimmt, ohne dass ein Winkelgetriebe notwendig ist. Alternativ kann der Schneidkopf 10 auch über ein Winkelgetriebe angetrieben sein. Der Schneidkopf 10 ist zweckmäßig möglichst nah an dem Ende 5 des Führungsrohres 6 angeordnet und vorteilhaft mit einem Wickelschutz 106 versehen, so dass ein Einwickeln von Gras in den Antriebsstrang vermieden ist. Auch eine andere Anordnung des Antriebsmotors 101, insbesondere am unteren Ende 105 des Führungsrohres 6, kann zweckmäßig sein.

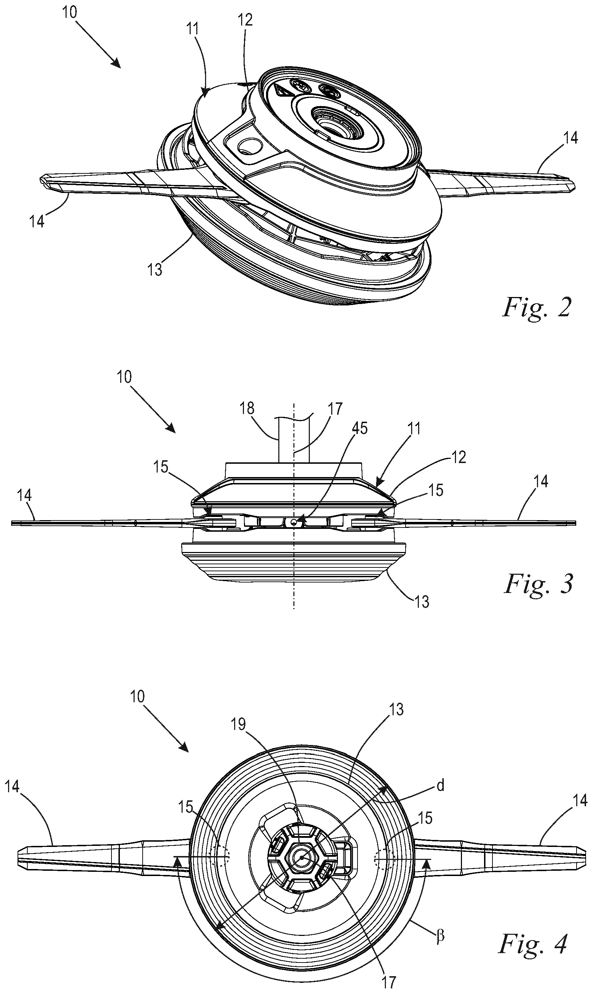

Wie in den Fig. 2 bis 4 gezeigt, umfasst der Schneidkopf 10 einen Grundkörper 11, der aus einem oberen Grundkörperteil 12 und einem unteren Grundkörperteil 13 gebildet ist. Ist der Schneidkopf 10 an dem Arbeitsgerät 100 befestigt, liegt dieser mit dem oberen Grundkörperteil 12 an dem Arbeitsgerät 100 an. Der untere Grundkörperteil 13 ist in üblicher Betriebshaltung des Arbeitsgerätes 100 dem Boden 4 zugewandt. Zwischen dem oberen Grundkörperteil 12 und dem unteren Grundkörperteil 13 ist mindestens ein Schneidwerkzeug 14 gehalten. Zur Befestigung des Schneidkopfes 10 an einer Abtriebswelle 18 des Arbeitsgerätes 100 ist an dem Grundkörper 11 ein Schraubelement (Fig. 4) angeordnet. Der Schneidkopf 10, insbesondere der Grundkörper 11, ist im Betrieb des Arbeitsgerätes 100 um eine Drehachse 17 drehend angetrieben.

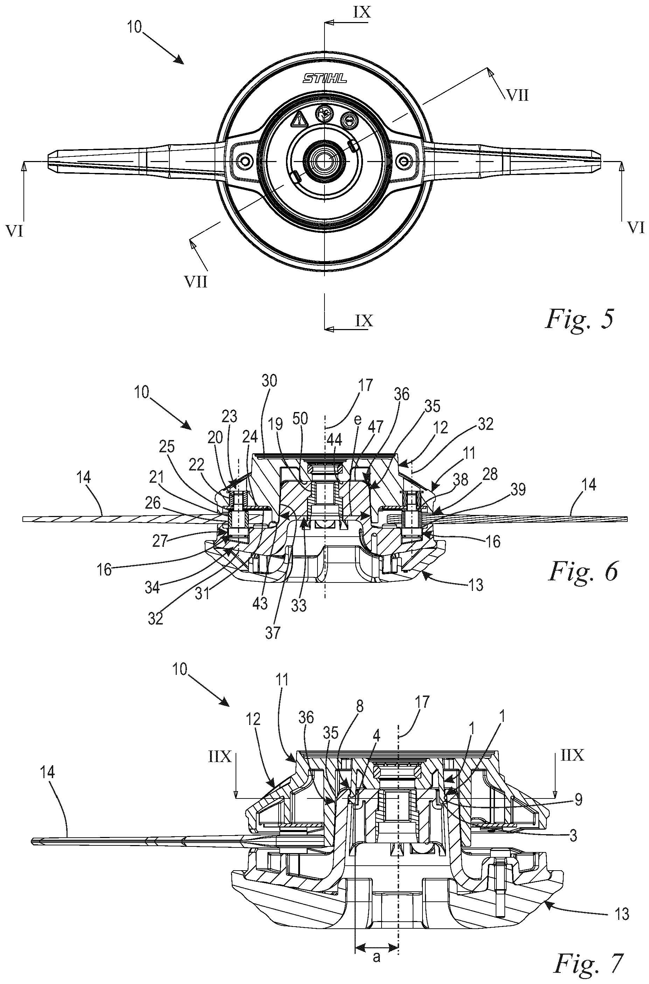

Wie in den Fig. 2 bis 4 gezeigt, umfasst der Schneidkopf 10 im Ausführungsbeispiel zwei Schneidwerkzeuge 14, die jeweils an einer Aufnahme 15 gehalten sind. Die Schneidwerkzeuge 14 sind in der bevorzugten Ausführung als Schneidmesser ausgebildet. Der Schneidkopf 10 weist bevorzugt weitere Aufnahmen 45 auf, die zur Befestigung von Schneidfäden dienen. So kann der Schneidkopf 10 mit Schneidmessern und/oder mit Schneidfäden betrieben werden. Die Aufnahmen 15 sind als Lagerbolzen 16 ausgebildet (Fig. 6), wodurch ein Schneidwerkzeug 14 an dem Lagerbolzen 16 um dessen Lagerachse 32 schwenkbar gehalten ist. Die Lagerachse 32 der Lagerbolzen 16 verläuft parallel zur Drehachse 17. In einer alternativen Ausführung des Schneidkopfes 10 können auch drei oder mehrere Schneidwerkzeuge 14 vorgesehen sein. Um eine Unwucht des Schneidkopfes 10 zu vermeiden, sind die Aufnahmen 15 für die Schneidwerkzeuge 14 in einem gleichmäßigen Winkelabstand β um die Drehachse 17 des Schneidkopfes 10 angeordnet. Somit ist der Winkelabstand β zwischen den Lagerachsen 32 benachbarter Aufnahmen 15 vorzugsweise konstant. Demnach beträgt im vorliegenden Ausführungsbeispiel des Schneidkopfes mit zwei Aufnahmen 15 der Winkelabstand β 180°.

Wie in Fig. 4 und 6 dargestellt, ist das Schraubelement 19 am unteren Grundkörperteil 13 angeordnet. Das Schraubelement 19 ist im Ausführungsbeispiel als eine Mutter ausgebildet. Im Ausführungsbeispiel ist das Schraubelement 19 im unteren Grundkörperteil 13 angeordnet. Das Schraubelement 19 ist sechskantig ausgebildet und in einer entsprechenden Gegenkontur des unteren Grundkörperteils 13 aufgenommen, wodurch es formschlüssig gegen Verdrehung gegenüber dem Grundkörperteil 13 gehalten ist. Durch die Trägheit des unteren Grundkörperteils 13 wird in Betrieb des Schneidkopfes 10 ein Nachziehen des Schraubelementes 19 gewährleistet. Das Schraubelement 19 ist im Ausführungsbeispiel aus einem Metall-Werkstoff ausgebildet. Das untere Grundkörperteil 13 besteht hingegen aus einem Kunststoff. Das Schraubelement 19 ist im Ausführungsbeispiel in das untere Grundkörperteil 13 eingepresst, kann jedoch als alternative Befestigung an dem unteren Grundkörperteil 13 mit Kunststoff umspritzt sein. In einer alternativen Ausführung des Schneidkopfes 10 kann es zweckmäßig sein, das Schraubelement 19 als verliersichere Mutter auszubilden, die gegenüber dem unteren Grundkörperteil drehbar ist. Bei der Befestigung des Schneidkopfes 10 wird dieser mittels des Schraubelementes 19 auf die in Fig. 3 schematisch dargestellte Abtriebswelle 18 aufgeschraubt.

In Fig. 5 ist der Schneidkopf 10 in einer Draufsicht gezeigt, um die verschiedenen Schnittdarstellungen anzuzeichnen.

Die Darstellung nach Fig. 6 zeigt einen Schnitt des Schneidkopfes 10 mit Schneidwerkzeug 14 durch die als Lagerbolzen 16 ausgebildeten Aufnahmen 15. In der bevorzugten Ausführung des Schneidkopfes 10 sind die Lagerbolzen 16 am oberen Grundkörperteil 12 befestigt. In einer alternativen Ausführung kann es zweckmäßig sein, die Lagerbolzen 16 an dem unteren Grundkörperteil 13 zu befestigen. Die Lagerbolzen 16 sind einseitig entweder am oberen Grundkörperteil 12 oder am unteren Grundkörperteil 13 befestigt. Der Lagerbolzen 16 weist einen Gewindeabschnitt 20 und einen Halteabschnitt 21 auf. Der Lagerbolzen 16 ist mit seinem Gewindeabschnitt 20 in ein an dem oberen Grundkörperteil 12 vorgesehenes Haltegewinde 22 eingeschraubt. Das Haltegewinde 22 ist im Ausführungsbeispiel aus einer im oberen Grundkörperteil 12 mit Kunststoff umspritzten Mutter ausgebildet. Alternativ kann das Haltegewinde 22 im oberen Grundkörperteil 12 eingepresst sein. Im Ausführungsbeispiel ist das Haltegewinde 22 für eine bessere Kraftübertragung umfangsseitig gerändelt. Das obere Grundkörperteil 12 umfasst eine Öffnung 23, die sich in etwa koaxial zur Lagerachse 32 des Lagerbolzens 16 bis zu der dem Arbeitsgerät 100 zugewandten Oberseite 30 des oberen Grundkörperteils 12 erstreckt. Die Öffnung 23 dient zur Vermeidung von Materialanhäufung beim Umspritzen des Haltegewindes 22 und verhindert, dass Kunststoff in das Innengewinde des Haltegewindes 22 eindringt. Der Lagerbolzen 16 wird über der Oberseite 30 abgewandten Unterseite 31 des oberen Grundkörperteils 12 in das Haltegewinde 22 eingeschraubt. Das obere Grundkörperteil 12 und das untere Grundkörperteil 13 werden durch den Lagerbolzen 16 nicht axial zusammengehalten. Das Auseinanderziehen beider Grundkörperteile 12, 13 erfordert keine Veränderung an dem Lagerbolzen 16.

Ein eigenständiger erfinderischer Gedanke des vorliegenden Schneidkopfes 10 besteht darin, dass, wie in Fig. 6 gezeigt, eine aus Metall bestehende Abstützplatte 24 vorgesehen ist, die an der dem unteren Grundkörperteil 13 zugewandten Unterseite 31 des oberen Grundkörperteils 12 befestigt ist. Die Abstützplatte 24 ist im Ausführungsbeispiel einteilig ausgebildet und weist eine Hauptöffnung zum teilweisen Durchführen des unteren Grundkörperteils 13 auf. Die Abstützplatte 24 weist zudem für jeden Lagerbolzen 16 eine weitere Öffnung auf, durch die sich der jeweilige Lagerbolzen 16 erstreckt. Die Abstützplatte 24 dient zur Abstützung des Lagerbolzens 16 gegen das obere Grundkörperteil 12. Zwischen einer ersten Wellenschulter 38 des Lagerbolzens 16 und der Abstützplatte 24 ist ein Stützring 25 vorgesehen. Beim Festschrauben des Lagerbolzens 16 über das Haltegewinde 22 wird der Lagerbolzen 16 über die erste Wellenschulter 38 und den Stützring 25 gegen die Abstützplatte 24 gespannt. Durch die Abstützplatte 24 werden die Kräfte in das obere Grundkörperteil 12 eingeleitet. Durch die Ausbildung der Abstützplatte 24 aus Metall können hohe Abstützkräfte gewährleistet werden. Dadurch, dass sich alle Lagerbolzen 16 an derselben Abstützplatte 24 abstützen, kann sich ein Teil der im Betrieb auftretenden Kräfte gegenseitig kompensieren. Dadurch wird das obere Grundkörperteil 12 entlastet.

Wie in Fig. 6 gezeigt, ist am Halteabschnitt 21 des Lagerbolzens 16 eine Lagerhülse 26 vorgesehen, an der das Schneidwerkzeug 14 gehalten ist. Das Schneidwerkzeug 14 ist somit um die Lagerachse 32 des Lagerbolzens 16 schwenkbar. Die Lagerachse 32 des Lagerbolzens 16 verläuft parallel zur Drehachse 17 des Schneidkopfes 10. Die Lagerhülse 26 ist zwischen dem Stützring 25 und einer zweiten Wellenschulter 39 des Lagerbolzens 16 schwimmend angeordnet. Die Lagerhülse 26 ist vorzugsweise geölt und aus Sintermetall ausgebildet, wodurch die Reibkräfte zwischen Schneidwerkzeug 14 und Lagerbolzen16 reduziert sind. Die beim Schwenken zwischen der Lagerhülse 26 und dem Schneidwerkzeug 14 entstehende Wärme wird über die Abstützplatte 24 in das obere Grundkörperteil 12 übertragen.

Das Schneidwerkzeug 14 ist an seinem einen Ende in einem Schwenkspalt 28 des Schneidkopfes 10 an der Lagerhülse 26 schwenkbar gehalten und ragt mit dem anderen Ende aus dem Schwenkspalt 28 heraus. Der Schwenkspalt 28 ist durch die Unterseite 31 des oberen Grundkörperteils 12 und durch die der Unterseite 31 zugewandte Oberseite 43 des unteren Grundkörperteils 13 begrenzt. Ist der Schneidkopf 10 montiert, erstreckt sich der Lagerbolzen 16 über die gesamte in Richtung der Drehachse 17 verlaufende Höhe des Schwenkspaltes 28 und ragt in eine für den Lagerbolzen 16 vorgesehene Bolzenöffnung 27 des unteren Grundkörperteils 13. Die Lagerbolzen 16 sind eingetaucht in die Bolzenöffnungen 27 auch durch das untere Grundkörperteil 13 abgestützt.

Wie in Fig. 6 gezeigt, weist das obere Grundkörperteil 12 eine sich koaxial zur Drehachse 17 erstreckende Durchgangsöffnung 46 zum Hindurchstecken der Abtriebswelle 18 auf. Im Ausführungsbeispiel des Schneidkopfes 10 ist kein Formschluss zwischen der Abtriebswelle 18 und dem oberen Grundkörperteil 12 vorgesehen. In einer alternativen Ausführungsform kann auch ein Formschluss zwischen der Abtriebswelle 18 und dem oberen Grundkörperteil 12 vorgesehen sein. In einer solchen Ausführungsform ist die Schnappverbindung 1 jedoch drehbar an der Haltekontur 4 auszubilden, um das untere Grundkörperteil 13 auf die Abtriebswelle 18 drehen zu können. Ist lediglich das Schraubelement 19 drehbar gegenüber dem unteren Grundkörperteil 13 ausgebildet, kann auf eine drehbare Schnappverbindung 1 verzichtet werden.

Das untere Grundkörperteil 13 ist in radialer Richtung zur Drehachse 17 in einen Innenbereich 33 und einen Außenbereich 34 zu unterteilen. Der Innenbereich 33 des unteren Grundkörperteils 13 ist als ein Dom 35 ausgebildet, der sich in eine Zentralöffnung 36 des oberen Grundkörperteils 12 erstreckt. Die Zentralöffnung 36 ist insbesondere topfförmig ausgebildet und erstreckt sich um die Durchgangsöffnung 46. In montiertem Zustand des Schneidkopfes 10 kontaktiert der Dom 35 mit seiner der Unterseite 31 des oberen Grundkörperteils 12 zugewandten Stirnseite 47das obere Grundkörperteil 12 an der Stirnseite 50 der Zentralöffnung 36. Die Stirnseite 47 ist Teil der Oberseite 43 des unteren Grundkörperteils 13. Der Außenbereich 34 des unteren Grundkörperteils 13 dient im Wesentlichen zur Befestigung des Schneidwerkzeuges 14 an den Aufnahmen 15 und zur Bildung des Schwenkspaltes 28 zwischen dem oberen Grundkörperteil 12 und dem unteren Grundkörperteil 13. Im bevorzugten Ausführungsbeispiel besitzt der Dom 35 des unteren Grundkörperteils 13 einen radial zur Drehachse 17 gemessenen Durchmesser e, der insbesondere höchstens 50 % des radial zur Drehachse 17 gemessenen Durchmessers d des Schneidkopfes 10 entspricht. In einer alternativen Ausführung des Schneidkopfes 10 kann auch ein Dom mit größerem Durchmesser e zweckmäßig sein. Im Dom 35 des unteren Grundkörperteils 13 ist das Schraubelement 19, insbesondere drehfest, gehalten.

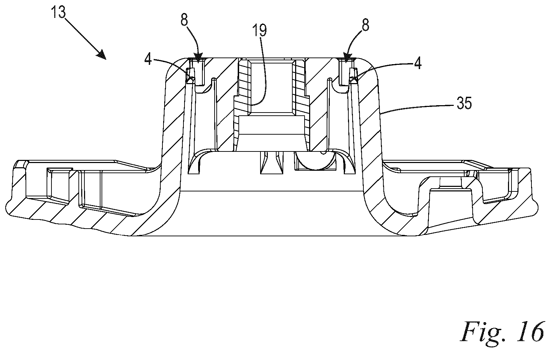

Wie in den Fig. 7, 8, 13, 16 gezeigt, umfasst der Schneidkopf 10 eine lösbare Schnappverbindung 1. Die Schnappverbindung 1 umfasst mindestens einen Greifhaken 2 und mindestens eine Haltekontur 4. Der Greifhaken 2 ist vorzugsweise biegsam in radialer Richtung weg von der Drehachse 17 ausgebildet. Der mindestens eine Greifhaken 2 ist an dem oberen Grundkörperteil 12 ausgebildet und erstreckt sich in die Zentralöffnung 36 des oberen Grundkörperteils 12. An dem dem unteren Grundkörperteil 13 zugewandten Ende des Greifhakens 2 ist ein Hakenkopf 3 ausgebildet. Die Haltekontur 4 ist an dem unteren Grundkörperteil 13, insbesondere an dem Dom 35 des unteren Grundkörperteils 13 ausgebildet. Die Schnappverbindung 1 ist zwischen den einander zugewandten Stirnseiten 47, 50 der Grundkörperteile 12, 13, also der Unterseite 31 des oberen Grundkörperteils 12 und der Oberseite 43 des unteren Grundkörperteils 13 ausgebildet. Die Greifhaken 2 sind in der topfförmigen Zentralöffnung 36 des oberen Grundkörperteils 12 geschützt angeordnet.

Beim Montieren des Schneidkopfes 10 werden das obere Grundkörperteil 12 und das untere Grundkörperteil 13 derart zusammengeschoben, dass sich der Greifhaken 2 in eine Halteöffnung 8 am Dom 35 einfädelt und der Greifhaken 2 und die Haltekontur 4 in Wirkverbindung stehen. Dabei rastet der Greifhaken 2 in die Haltekontur 4 ein. Der Greifhaken 2 hintergreift mit seinem Hakenkopf 3 die Haltekontur 4, wodurch die Schnappverbindung 1 einrastet. Das obere Grundkörperteil 12 und das untere Grundkörperteil 13 sind mittels der Schnappverbindung 1 verbunden. Die Schnappverbindung 1 übt in eingerasteter Stellung eine Haltekraft zwischen dem oberen Grundkörperteil 12 und dem unteren Grundkörperteil 13 aus, die im Wesentlichen in Richtung der Drehachse 17 wirkt.

Um die Schnappverbindung 1 wieder zu lösen, sind das obere Grundkörperteil 12 und das untere Grundkörperteil 13 in Richtung der Drehachse 17 auseinanderzuziehen. Dabei ist lediglich die Haltekraft der Schnappverbindung 1 zu überwinden. Der Haltekopf 3 weist eine Kontaktfläche 9 auf, die die Wirkverbindung mit der Haltekontur 4 herstellt. Die Kontaktfläche 9 ist schräg zur Drehachse 17, also zur Zugrichtung des oberen Grundkörperteils 12 und des unteren Grundkörperteils 13 ausgerichtet. Zieht der Bediener die Grundkörperteile 12, 13 mit ausreichender Zugkraft auseinander, gleitet der Hakenkopf 3 über seine schräge Kontaktfläche 9 an der Haltekontur 4 ab, wodurch der Greifhaken 2 nach innen zur Drehachse 17 gedrückt wird. Dabei löst sich die Schnappverbindung 1 und die Grundkörperteile 12, 13 sind voneinander getrennt.

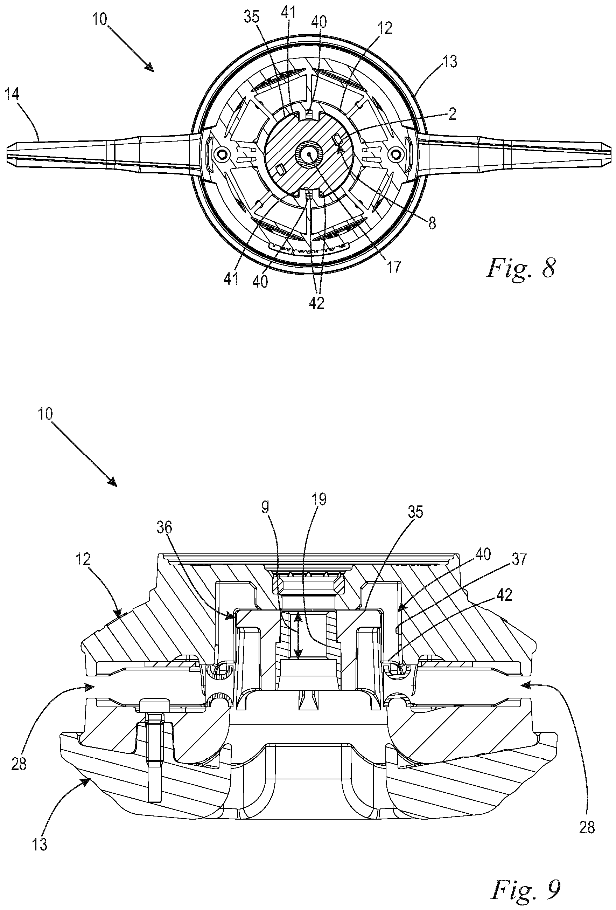

Wie in den Fig. 7 und 8 gezeigt, umfasst die Schnappverbindung 1 des bevorzugten Ausführungsbeispiels zwei Greifhaken 2 mit entsprechenden Haltekonturen 4. In einem alternativen Ausführungsbeispiel kann es zweckmäßig sein, auch mehrere Greifhaken 2 mit mehreren Haltekonturen 4 vorzusehen. Umfasst die Schnappverbindung 1 mehrere Greifhaken 2, sind diese in Umfangsrichtung der Drehachse 17 vorzugsweise in gleichmäßigen Winkelabständen verteilt. Durch den Einsatz mehrerer Greifhaken 2 können die Haltekräfte der Schnappverbindung 1 erhöht werden. Alternativ kann auch die Kontaktfläche 9 des Hakenkopfes 3 sowie die mit dieser in Wirkverbindung stehende Haltekontur 4 angepasst werden, um eine zu erzielende Haltekraft einzustellen.

Die Befestigung eines Schneidkopfes 10 erfolgt an einem Arbeitsgerät in den nachfolgenden Schritten:
Der Bediener dreht das Arbeitsgerät 100 derart um, dass das Ende der Abtriebswelle 18 gegen die Schwerkraft gerichtet ist. Anschließend wird das obere Grundkörperteil 12 auf die Abtriebswelle 18 aufgefädelt. Danach fädelt der Bediener die Schneidwerkzeuge 14 auf die Lagerbolzen 16 auf, die an dem oberen Grundkörperteil 12 angeschraubt sind. Der Bediener schiebt das untere Grundkörperteil 13 auf das obere Grundkörperteil 12 auf, bis die Schnappverbindung 1 einrastet. Anschließend wird der gesamte Schneidkopf 10 über das Schraubelement 19 am unteren Grundkörperteil 13 auf die Abtriebswelle 18 aufgeschraubt. Alternativ können die Grundkörperteile 12, 13 mit den Schneidwerkzeugen 14 vormontiert werden und danach auf die Abtriebswelle 18 aufgeschraubt werden.

Die Schnappverbindung 1 ermöglicht dem Bediener, die Grundkörperteile 12, 13 mit dem Schneidwerkzeug 14 vorzumontieren und die Anordnung aus Schneidkopf 10 und Schneidwerkzeug 14 gemeinsam an der Abtriebswelle 18 des Arbeitsgerätes 100 festzuschrauben. Dadurch wird vermieden, dass der Bediener einzelne Bauteile beim Befestigen des Schneidkopfes 10 verliert. Die Montage des Schneidkopfes 10 ist dadurch vereinfacht.

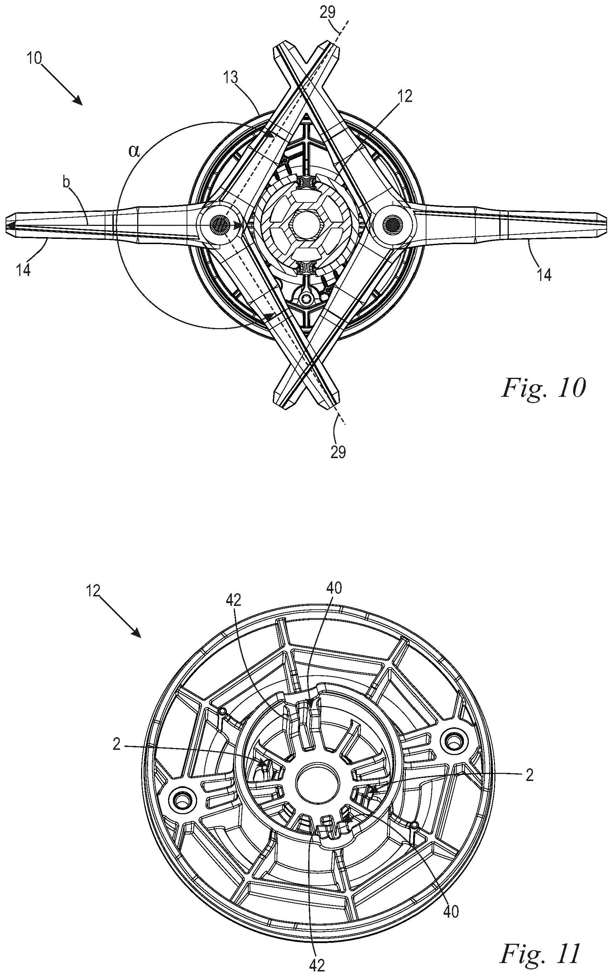

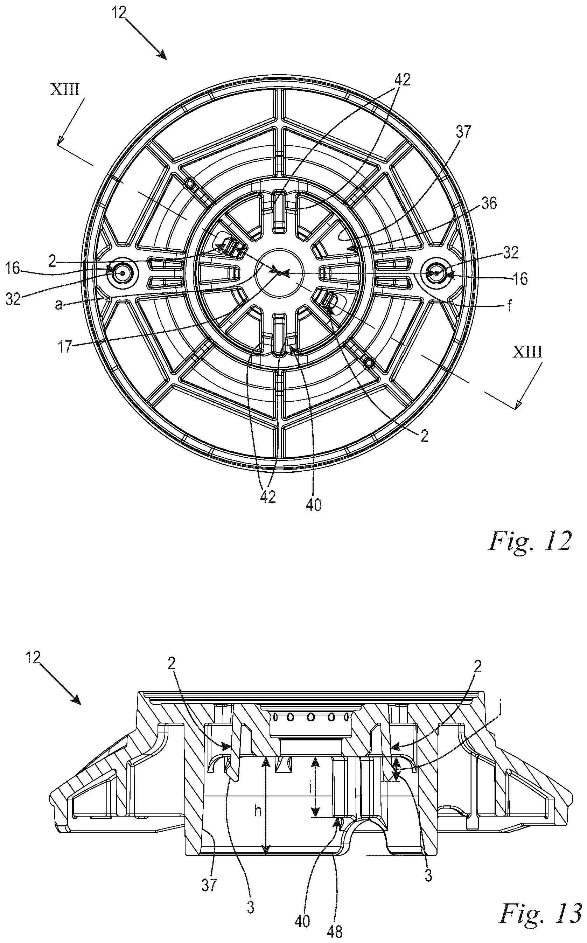

Wie in den Fig. 8 und 9 gezeigt, umfasst der Schneidkopf 10 eine Störkontur 40 und eine Führungsnut 41. Im Ausführungsbeispiel ist die Störkontur 40 an dem oberen Grundkörperteil 12 ausgebildet. Die Führungsnut 41 ist hingegen an dem unteren Grundkörperteil 13 ausgebildet. In einer alternativen Ausführungsform des Schneidkopfes 10 kann die Störkontur 40 selbstverständlich auch an dem unteren Grundkörperteil 13 und die Führungsnut 41 an dem oberen Grundkörperteil 12 ausgebildet sein. Wie insbesondere in den Figuren 11 und 12 gezeigt, ist die Störkontur 40 an der Innenwand 37 des oberen Grundkörperteils 12 ausgebildet. Die Störkontur 40 ist als sich in axialer Richtung, also in Richtung der Drehachse 17, erstreckende Rippe 42 ausgebildet. Um aus fertigungstechnischen Gründen Materialanhäufungen zu vermeiden, ist mittig der Rippe 42 eine Aussparung vorgesehen. Die Rippen 42 ragen ausgehend von der Innenwand 37 des oberen Grundkörperteils 12 in die Zentralöffnung 36 hinein. Im Ausführungsbeispiel sind zwei Störkonturen 40 vorgesehen, die in Umfangsrichtung zur Drehachse 17 gleichen Winkelabstand zueinander aufweisen.

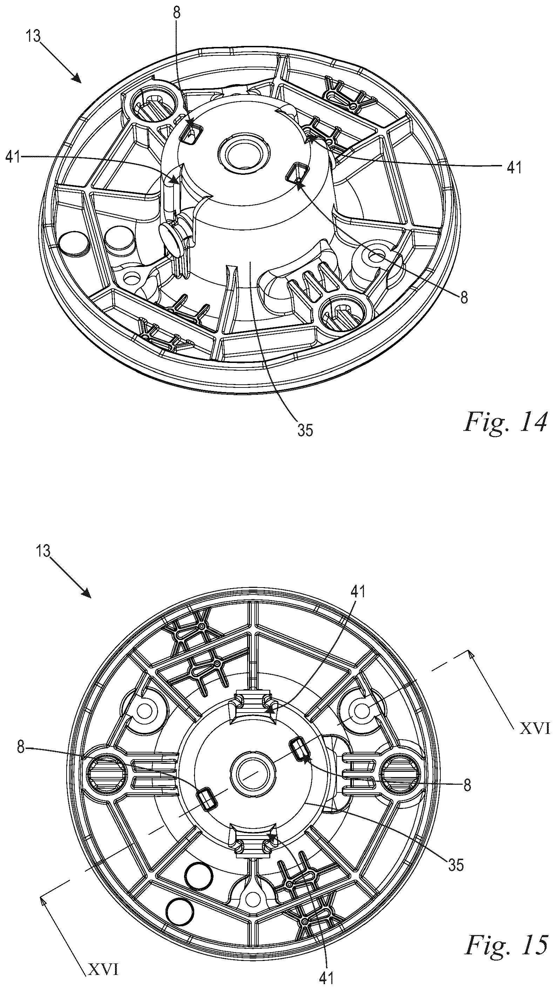

In den Fig. 14 und 15 ist die Führungsnut 41 gezeigt, die am Dom 35 des unteren Grundkörperteils 13 ausgebildet ist. Die Führungsnut 41 verläuft von der Stirnseite des Doms 35 in Richtung der Drehachse 17 weg von der Stirnseite des Doms 35. Im vorliegenden Ausführungsbeispiel sind zwei Führungsnuten 41 vorgesehen, die analog den Störkonturen 40 in gleichen Winkelabständen in Umfangsrichtung zur Drehachse 17 angeordnet sind. Die Anzahl der Führungsnuten 41 am Dom 35 entspricht im Ausführungsbeispiel der Anzahl der Störkonturen 40 an der Innenwand 37 des oberen Grundkörperteils 12. Es kann auch vorgesehen sein, dass weniger Störkonturen 40 als Führungsnuten 41 vorhanden sind.

Bei der Montage des Schneidkopfes 10 wird durch das Zusammenwirken von Störkontur 40 und Führungsnut 41 gewährleistet, dass das obere Grundkörperteil 12 und das untere Grundkörperteil 13 lediglich in einer vorbestimmten Lage zueinander montiert werden können. Zur Montage müssen also die Grundkörperteile 12, 13 in Umfangsrichtung zueinander ausgerichtet werden. Dabei gleitet das obere Grundkörperteil 12 mit seiner Störkontur 40 auf der Stirnfläche 47 des Doms 35 entlang, bis der Bediener die Grundkörperteile 12, 13 durch Verdrehung derart zueinander ausgerichtet hat, dass sich Störkontur 40 und Führungsnut 41 in Richtung der Drehachse 17 gegenüberliegen. Das obere Grundkörperteil 12 besitzt einen in axialer Richtung über das Störelement 40 hervorstehenden Kragen 48 mit einer Kragenstirnseite 49, der dem Benutzer die radiale Ausrichtung beider Grundkörperteile 12, 13 zueinander, während des Verdrehens abnimmt. Die Störkontur 40 ist dabei derart ausgebildet, dass diese in die Führungsnut 41 gleiten kann und die Grundkörperteile 12, 13 zusammengeschoben werden können.

Die Schnappverbindung 1 und die Störkontur 40 bzw. die Führungsnut 41 sind dabei derart aufeinander abgestimmt, dass beim Zusammenschieben der Grundkörperteile 12, zuerst die Störkontur 40 in die Führungsnut 41 gleiten muss, bevor die Greifhaken 2 in die Halteöffnung 8 eindringen können. Durch den Kontakt zwischen der Störkontur 40 und der Führungsnut 41 können in Umfangsrichtung zur Drehachse 17 Drehmomente zwischen den Grundkörperteilen 12, 13 übertragen werden. Dies hat zur Folge, dass die Grundkörperteile 12, 13 bereits beim Eindringen der Greifhaken 2 in die Halteöffnung 3 am Dom 35 nicht mehr zueinander verdreht werden können. Durch das Zusammenwirken von Störkontur 40 und der Führungsnut 41 sind die Grundkörperteile 12, 13 drehfest miteinander verbunden. Störkontur 40 und Führungsnut 41 bilden in Umfangsrichtung zur Drehachse 17 eine formschlüssige Verbindung. Dadurch wird eine ungewollte Verdrehung der Grundkörperteile 12, 13 durch den Bediener vermieden. So kann das Abbrechen der Greifhaken 2 während des Montagevorgangs des Schneidkopfes 10 verhindert werden. Die Greifhaken 2 der Schnappverbindung 1 sind bei der Montage durch die Störkontur 40 und die Führungsnut 41 geschützt.

Wie in Fig. 9 gezeigt, weist das Gewinde des Schraubelementes 19 eine in Richtung der Drehachse 17 gemessene Gewindelänge g auf. Das obere Grundkörperteil 12 weist eine axial gemessene Gesamteintauchtiefe h auf, die dem Abstand zwischen der Kragenstirnseite 49 des Kragens 48 und der Stirnseite 50 der Zentralöffnung 36 entspricht. Die Störkontur 40 besitzt eine axial gemessene Länge i von der Stirnseite 50 der Zentralöffnung 36 bis zur Stirnseite der Störkontur 40. Ferner weist der Greifhaken 2 eine Eintauchtiefe j auf, die axial gemessen von der Stirnseite 50 der Zentralöffnung 36 bis Ende des Hakenkopfes 3 verläuft. Die Gesamteintauchtiefe h ist größer als die Länge i der Störkontur 40, wodurch bei Montage der Grundkörperteile 12, 13 diese zuerst radial durch den Kragen 48 geführt sind. Die Länge i der Störkontur 40 ist größer als die Eintauchtiefe j des Greifhakens 2, wodurch zuerst die Störkontur 40 mit der Führungsnut 41 im Eingriff sind und anschließend erst der Greifhaken 2 in die Haltekontur 4 eingreift. Die Länge i der Störkontur 40 beträgt mindestens 120 %, insbesondere 150 %, vorzugsweise in etwa 200 % der Eintauchtiefe j des Greifhakens 2. Die Störkontur j entspricht dabei vorzugsweise in etwa der Gewindelänge g des Schraubelementes 19.

Wie in Fig. 12 gezeigt, liegen die Störkonturen 40 auf halbem Winkelabstand, hier 90°, zwischen benachbarten Lagerbolzen 16. Dies ist vorteilhaft, da die Führungsnut 41 einen Teil der Schneidfadenaufnahme bildet. Die Greifhaken 2 sind vorzugsweise mittig zwischen zueinander benachbarten Lagerbolzen 16 und Störkontur 40 angeordnet. Der Greifhaken 2 kann je nach Struktur des Grundkörperteils 12, 13 und entsprechenden Versteifungsrippen auch außermittig zwischen dem Lagerbolzen 16 und der Störkontur 40 angeordnet sein.

In Fig. 10 ist eine Schnittdarstellung des Schneidkopfes 10 gezeigt, in der die Schneidwerkzeuge 14 maximal ausgeschwenkt werden. Der Schwenkwinkel α ergibt sich aus den zwei entgegengesetzten Schwenkanschlägen des Grundkörpers 11 für ein entsprechendes Schneidwerkzeug 14. In der Fig. 10 ist der maximale Schwenkwinkel α des Schneidwerkzeuges 14 gezeigt, der in Umfangsrichtung zum Lagerbolzen 16 von der Längsachse 29 des Schneidwerkzeuges 14 ausgehend gemessen ist. Der Schwenkwinkel α beträgt vorzugsweise mindestens 60°, vorzugsweise mindestens 120°, insbesondere in etwa 200°. Die Schwenkebene des Schneidwerkzeuges 14 ist senkrecht zur Drehachse 17 angeordnet. Wie in Fig. 7 gezeigt, weist die Schnappverbindung 1 einen in radialer Richtung zur Drehachse 17 gemessenen Abstand a auf, der höchstens 40 %, vorzugsweise höchstens 30 %, insbesondere 25 % des Durchmessers d des Schneidkopfes 10 beträgt. Die Lagerachse 32 weist einen Abstand f zur Drehachse 17 auf. Der Abstand f zwischen der Lagerachse 32 und der Drehachse 17 ist größer als der Abstand a zwischen der Schnappverbindung 1 und der Drehachse 17 (siehe Fig. 12). Demnach liegt die Schnappverbindung 1 in radialer Richtung zur Drehachse 17 innerhalb der Lagerachsen 32 der Lagerbolzen 16. Durch die Ausbildung der Schnappverbindung 1 nahe der Drehachse 17 werden die Bauelemente in den Innenbereich des Schneidkopfes 10 verlagert. Dadurch kann der Schwenkspalt 28 entsprechend frei bleiben und ein großer Schwenkwinkel β ermöglicht werden. Zudem weist das Schneidwerkzeug 14 eine in seiner Längsrichtung gemessene Länge b auf, wobei die Länge b mindestens 60 % des Durchmessers d des Schneidkopfes 10 entspricht. In einer alternativen Ausführung des Schneidkopfes 10 kann die Länge b des Schneidmessers 14 auch kürzer ausgebildet sein.

## Patentansprüche

1. Schneidkopf für eine Motorsense,
umfassend einen geteilten Grundkörper (11) mit einem oberen Grundkörperteil (12) und einem unteren Grundkörperteil (13),
wobei am unteren Grundkörperteil (13) ein Schraubelement (19) angeordnet ist,
wobei das Schraubelement (19) zur Befestigung an einer Abtriebswelle (18) einer Motorsense dient,
wobei zwischen dem oberen Grundkörperteil (12) und dem unteren Grundkörperteil (13) mindestens eine Aufnahme (15) zur Befestigung eines Schneidwerkzeuges (14) vorgesehen ist,
wobei der Grundkörper (11) um seine Drehachse (17) im Betrieb einer Motorsense drehend antreibbar ist,
wobei der obere Grundkörperteil (12) und der untere Grundkörperteil (13) mittels einer lösbaren Schnappverbindung (1) zueinander gehalten sind.
**dadurch gekennzeichnet, dass** die Schnappverbindung (1) einen in radialer Richtung zur Drehachse (17) gemessenen Abstand (a) aufweist, der höchstens 40% des Durchmessers (d) des Schneidkopfes (10) beträgt.

2. Schneidkopf nach Anspruch 1,
**dadurch gekennzeichnet, dass** die Schnappverbindung (1) einen in radialer Richtung zur Drehachse (17) gemessenen Abstand (a) aufweist, der höchstens 30%, vorzugsweise höchstens 25% des Durchmessers (d) des Schneidkopfes (10) beträgt.

3. Schneidkopf nach Anspruch 2,
**dadurch gekennzeichnet, dass** die Aufnahme (15) eine in Richtung der Drehachse (17) verlaufende Lagerachse (32) aufweist, wobei die Lagerachse (32) einen Abstand (f) zur Drehachse (17) besitzt und der Abstand (f) zwischen der Lagerachse (32) und der Drehachse (17) größer ist als der Abstand (a) zwischen der Schnappverbindung (1) und der Drehachse (17).

4. Schneidkopf nach einem der Ansprüche 1 bis 3,
**dadurch gekennzeichnet, dass** die Schnappverbindung (1) mindestens einen Greifhaken (2) umfasst, und mindestens eine mit dem Greifhaken (2) in Wirkverbindung stehende Haltekontur (4).

5. Schneidkopf nach Anspruch 4,
**dadurch gekennzeichnet, dass** der Greifhaken (2) am oberen Grundkörperteil (12) und die mindestens eine Haltekontur (4) am unteren Grundkörperteil (13) angeordnet sind.

6. Schneidkopf nach Anspruch 4 oder 5,
**dadurch gekennzeichnet, dass** der mindestens eine Greifhaken (2) einen Hakenkopf (3) aufweist, der zum Hintergreifen der mindestens einen Haltekontur (4) ausgebildet ist.

7. Schneidkopf nach Anspruch 6,
**dadurch gekennzeichnet, dass** der Hakenkopf (3) derart ausgebildet ist, dass die Schnappverbindung (1) beim Zusammendrücken der Grundkörperteile (12, 13) einrastet und beim Auseinanderziehen der Grundkörperteile (12, 13) entrastet.

8. Schneidkopf nach einem der Ansprüche 1 bis 7,
**dadurch gekennzeichnet, dass** eine Störkontur (40) an einem der beiden Grundkörperteile (12, 13) und eine mit der Störkontur (40) zusammenwirkende, in Richtung der Drehachse (17) verlaufende Führungsnut (41) an dem anderen Grundkörperteil (12, 13) vorgesehen ist, um das obere Grundkörperteil (12) und das untere Grundkörperteil (13) mittels der Störkontur (40) und der Führungsnut (41) in Umfangsrichtung der Drehachse (17) zueinander auszurichten.

9. Schneidkopf nach Anspruch 8,
**dadurch gekennzeichnet, dass** die Schnappverbindung (1) derart ausgebildet ist, dass nur bei über die Störkontur (40) und die Führungsnut (41) zueinander ausgerichtetem oberem Grundkörperteil (12) und unterem Grundkörperteil (13) die Schnappverbindung (1) einrastbar ist.

10. Schneidkopf nach Anspruch 8 oder 9,
**dadurch gekennzeichnet, dass** über die Störkontur (40) und die Führungsnut (41) Drehmomente in Umfangrichtung zwischen dem oberen Grundkörperteil (12) und dem unteren Grundkörperteil (13) übertragbar sind.

11. Schneidkopf nach einem der Ansprüche 1 bis 10,
**dadurch gekennzeichnet, dass** die Aufnahme (15) als ein Lagerbolzen (16) ausgebildet ist, und ein Schneidwerkzeug (14) durch den Lagerbolzen (16) am Grundkörper (11) anordenbar ist.

12. Schneidkopf nach einem der Ansprüche 1 bis 11,
**dadurch gekennzeichnet, dass** der Lagerbolzen (16) einseitig an dem oberen Grundkörperteil (12) oder dem unteren Grundkörperteil (13) befestigt ist.

13. Schneidkopf nach Anspruch 11 oder 12,
**dadurch gekennzeichnet, dass** der Lagerbolzen (16) am oberen Grundkörperteil (12) befestigt ist.

14. Schneidkopf nach einem der Ansprüche 1 bis 13,
**dadurch gekennzeichnet, dass** das Schraubelement (19) drehfest an dem unteren Grundkörperteil (13) angeordnet ist.

15. Schneidkopf nach einem der Ansprüche 1 bis 14,
**dadurch gekennzeichnet, dass** an der mindestens einen Aufnahme (15) ein Schneidwerkzeug (14) schwenkbar angeordnet ist.

## Claims

1. Cutting head for a motor strimmer,
comprising a divided main body (11) having an upper main body part (12) and a lower main body part (13);
wherein a screw element (19) is disposed on the lower main body part (13);
wherein the screw element (19) serves for fastening to an output shaft (18) of a motor strimmer;
wherein at least one receptacle (15) for fastening a cutting tool (14) is provided between the upper main body part (12) and the lower main body part (13);
wherein the main body (11) is able to be rotationally driven about its rotation axis (17) during operation of a motor strimmer;
wherein the upper main body part (12) and the lower main body part (13) are held to one another by means of a releasable snap-fit connection (1),
**characterized in that** the snap-fit connection (1) has a spacing (a) which is measured in the radial direction relative to the rotation axis (17) and which is at most 40% of the diameter (d) of the cutting head (10).

2. Cutting head according to Claim 1,
**characterized in that** the snap-fit connection (1) has a spacing (a) which is measured in the radial direction relative to the rotation axis (17) and which is at most 30%, preferably at most 25%, of the diameter (d) of the cutting head (10).

3. Cutting head according to Claim 2,
**characterized in that** the receptacle (15) has a bearing axis (32) which extends in the direction of the rotation axis (17), wherein the bearing axis (32) possesses a spacing (f) from the rotation axis (17), and the spacing (f) between the bearing axis (32) and the rotation axis (17) is larger than the spacing (a) between the snap-fit connection (1) and the rotation axis (17).

4. Cutting head according to one of Claims 1 to 3,
**characterized in that** the snap-fit connection (1) comprises at least one gripping hook (2), and at least one holding contour (4) which is operatively connected to the gripping hook (2).

5. Cutting head according to Claim 4,
**characterized in that** the gripping hook (2) is disposed on the upper main body part (12), and the at least one holding contour (4) is disposed on the lower main body part (13).

6. Cutting head according to Claim 4 or 5,
**characterized in that** the at least one gripping hook (2) has a hook head (3) which is specified to engage behind the at least one holding contour (4).

7. Cutting head according to Claim 6,
**characterized in that** the hook head (3) is designed in such a manner that the snap-fit connection (1) latches when the main body parts (12, 13) are mutually compressed, and unlatches when the main body parts (12, 13) are pulled apart.

8. Cutting head according to one of Claims 1 to 7,
**characterized in that** an interference contour (40) is provided on one of the two main body parts (12, 13), and a guide groove (41) which interacts with the interference contour (40) and extends in the direction of the rotation axis (17) is provided on the other main body part (12, 13), so as to mutually align the upper main body part (12) and the lower main body part (13) in the circumferential direction of the rotation axis (17) by means of the interference contour (40) and the guide groove (41).

9. Cutting head according to Claim 8,
**characterized in that** the snap-fit connection (1) is designed in such a manner that the snap-fit connection (1) is able to be latched only in the case of the upper main body part (12) and the lower main body part (13) being mutually aligned by way of the interference contour (40) and the guide groove (41).

10. Cutting head according to Claim 8 or 9,
**characterized in that** torques acting in the circumferential direction between the upper main body part (12) and the lower main body part (13) are able to be transmitted by way of the interference contour (40) and the guide groove (41).

11. Cutting head according to one of Claims 1 to 10,
**characterized in that** the receptacle (15) is designed as a bearing pin (16), and a cutting tool (14) is able to be disposed on the main body (11) by way of the bearing pin (16).

12. Cutting head according to one of Claims 1 to 11,
**characterized in that** the bearing pin (16) is fastened unilaterally to the upper main body part (12) or the lower main body part (13).

13. Cutting head according to Claim 11 or 12,
**characterized in that** the bearing pin (16) is fastened to the upper main body part (12).

14. Cutting head according to one of Claims 1 to 13,
**characterized in that** the screw element (19) is co-rotationally disposed on the lower main body part (13).

15. Cutting head according to one of Claims 1 to 14,
**characterized in that** a cutting tool (14) is pivotably disposed on the at least one receptacle (15).

## Revendications

1. Tête de coupe pour une débroussailleuse,
comprenant un corps de base divisé (11) avec une partie de corps de base supérieure (12) et une partie de corps de base inférieure (13),
un élément vissable (19) étant agencé sur la partie inférieure du corps de base (13),
l'élément vissable (19) servant à une fixation sur un arbre d'entraînement (18) que comprend une débroussailleuse,
au moins un logement (15) pour la fixation d'un outil de coupe (14) étant prévu entre la partie supérieure du corps de base (12) et la partie inférieure du corps de base (13),
le corps de base (11) étant apte à être entraîné en rotation autour de son axe de rotation (17) lors du fonctionnement d'une débroussailleuse,
la partie supérieure du corps de base (12) et la partie inférieure du corps de base (13) étant maintenues l'une par rapport à l'autre au moyen d'un assemblage par encliquetage (1) libérable,
**caractérisée en ce que** l'assemblage par encliquetage (1) présente une distance (a), mesurée dans la direction radiale par rapport à l'axe de rotation (17), qui représente au maximum 40% du diamètre (d) de la tête de coupe (10).

2. Tête de coupe selon la revendication 1,
**caractérisée en ce que** l'assemblage par encliquetage (1) présente une distance (a) mesurée dans la direction radiale par rapport à l'axe de rotation (17), qui représente au maximum 30%, de préférence au maximum 25%, du diamètre (d) de la tête de coupe (10).

3. Tête de coupe selon la revendication 2,
**caractérisée en ce que** le logement (15) présente un axe de palier (32) s'étendant dans la direction de l'axe de rotation (17), l'axe de palier (32) étant à une distance (f) de l'axe de rotation (17) et la distance (f) entre l'axe de palier (32) et l'axe de rotation (17) étant supérieure à la distance (a) entre l'assemblage par encliquetage (1) et l'axe de rotation (17).

4. Tête de coupe selon l'une des revendications 1 à 3,
**caractérisée en ce que** l'assemblage par encliquetage (1) comprend au moins un crochet de préhension (2), et au moins un contour de retenue (4) en liaison active avec le crochet de préhension (2).

5. Tête de coupe selon la revendication 4,
**caractérisée en ce que** le crochet de préhension (2) est agencé sur la partie supérieure du corps de base (12) et ledit au moins un contour de retenue (4) sur la partie inférieure du corps de base (13).

6. Tête de coupe selon la revendication 4 ou la revendication 5,
**caractérisée en ce que** ledit au moins un crochet de préhension (2) présente une tête de crochet (3) qui est conçue pour saisir par l'arrière ledit au moins un contour de retenue (4).

7. Tête de coupe selon la revendication 6,
**caractérisée en ce que** la tête de crochet (3) est conçue de telle sorte que l'assemblage par encliquetage (1) s'enclenche lorsque les parties de corps de base (12, 13) sont pressées l'une contre l'autre et se désenclenche lorsque les parties de corps de base (12, 13) sont séparées.

8. Tête de coupe selon l'une des revendications 1 à 7,
**caractérisée en ce qu'**il est prévu un contour d'interférence (40) sur l'une des deux parties de corps de base (12, 13) et, sur l'autre partie de corps de base (12, 13), une rainure de guidage (41) coopérant avec le contour d'interférence (40) et s'étendant dans la direction de l'axe de rotation (17), afin d'aligner l'une par rapport à l'autre la partie de corps de base supérieure (12) et la partie de corps de base inférieure (13) au moyen du contour d'interférence (40) et de la rainure de guidage (41) dans la direction périphérique de l'axe de rotation (17).

9. Tête de coupe selon la revendication 8,
**caractérisée en ce que** l'assemblage par encliquetage (1) est conçu de telle sorte que l'assemblage par encliquetage (1) ne peut être enclenché que lorsque la partie supérieure du corps de base (12) et la partie inférieure du corps de base (13) sont alignées l'une par rapport à l'autre par le biais du contour d'interférence (40) et de la rainure de guidage (41).

10. Tête de coupe selon la revendication 8 ou la revendication 9,
**caractérisée en ce que** des couples de rotation sont aptes à être transmis dans la direction circonférentielle entre la partie de corps de base supérieure (12) et la partie de corps de base inférieure (13) par le biais du contour d'interférence (40) et de la rainure de guidage (41).

11. Tête de coupe selon l'une des revendications 1 à 10,
**caractérisée en ce que** le logement (15) est réalisé sous la forme d'un goujon (16) formant palier, et un outil de coupe (14) est apte à être agencé sur le corps de base (11) au moyen du goujon (16) formant palier.

12. Tête de coupe selon l'une des revendications 1 à 11,
**caractérisée en ce que** le goujon (16) formant palier est fixé d'un côté à la partie supérieure du corps de base (12) ou à la partie inférieure du corps de base (13).

13. Tête de coupe selon la revendication 11 ou la revendication 12,
**caractérisée en ce que** le goujon (16) formant palier est fixé à la partie supérieure du corps de base (12).

14. Tête de coupe selon l'une des revendications 1 à 13,
**caractérisée en ce que** l'élément vissable (19) est agencé de manière non tournante sur la partie inférieure du corps de base (13).

15. Tête de coupe selon l'une des revendications 1 à 14,
**caractérisée en ce qu'**un outil de coupe (14) est agencé de manière pivotante sur ledit au moins un logement (15).
